# EUROPÄISCHE PATENTANMELDUNG

(11) **EP 0 737 734 A2**
(43) Veröffentlichungstag der Anmeldung: **16.10.1996**
(21) Anmeldenummer: 96105329.5
(22) Anmeldetag: 03.04.1996
(51) Int. Cl.: C10M 105/20, C10M 129/24

(54) **Verwendung von Acetalen**

(30) Priorität: 13.04.1995 DE 19514035
(71) Anmelder: HOECHST AKTIENGESELLSCHAFT, 65929 Frankfurt am Main (DE)
(72) Erfinder: Weinelt, Frank, Dr., 84508 Burgkirchen (DE); Helwerth, Rainer, Dr., 65760 Eschborn (DE)

(57) **Zusammenfassung**

Die vorliegende Erfindung bezieht sich auf Motor-, Getriebe-, Schmieröle, Metallverarbeitungs-, Kühl-, Kühlschmier- und Hydraulikflüssigkeiten enthaltende Acetale, die durch die Umsetzung von einwertigen Aldehyden der Formel I

R¹ - CHO (I)

in der
- R¹: Wasserstoff, C₂-C₂₅-Alkyl, C₂-C₂₅-Alkenyl, C₁-C₂₀-Alkyl-C₆-C₁₂-Aryl oder C₆-C₁₂-Aryl bedeutet
oder
zweiwertigen Aldehyden der Formel II

OHC - (R²)ₐ - CHO (II)

in der
- R²: C₁-C₅-Alkylen, C₂-C₅-Alkenylen, C₆-C₁₂-Arylen oder C₁-C₂₀-Alkyl-C₆-C₁₂-Arylen bedeutet und
- a: entweder 0 oder 1 ist,
oder einem Gemisch der Aldehyde der Formeln I und II mit
a) einwertigen, alkoxylierten Alkoholen der Formel III

   R³ - (O - A)ₘ - OH (III)

   in der
   - R³: C₁-C₃₁-Alkyl, C₂-C₃₁-Alkenyl, C₅-C₂₀-Cycloalkyl, C₆-C₃₀-Aryl, C₁-C₁₀-Alkyl-C₆-C₃₀-Aryl, ein Säurerest der Formel C₁-C₃₁-Alkyl-C(O) oder C₂-C₃₁-Alkenyl-C(O) bedeutet,
   - A: Alkylengruppen mit 2 bis 10 C-Atomen bezeichnet und
   - m: für eine Zahl von 1 bis 50 steht
   oder
b) einwertigen, gegebenenfalls alkoxylierten Alkoholen der Formel IV

   H - O - (A - O)ₚ - R⁴ - (O - A)ₙ - O - R⁵ (IV)

   in der
   - R⁴: C₁-C₁₀-Alkylen, C₂-C₁₀-Alkenylen, C₅-C₂₀-Cycloalkylen oder C₆-C₁₈-Arylen bedeutet,
   - R⁵: C₁₀-C₃₁-Alkyl, C₁₀-C₃₂-Alkenyl oder eine Gruppe der Formel C(O)-R⁶ bedeutet, wobei
   - R⁶: C₁-C₃₁-Alkyl, C₂-C₃₁-Alkenyl, C₅-C₂₀-Cycloalkyl, C₆-C₃₀-Aryl oder C₁-C₁₀-Alkyl-C₆-C₃₀-Aryl bedeutet,
   - A: Alkylengruppen mit 2 bis 10 C-Atomen bezeichnet
   und
   n und p gleich oder verschieden sind und für eine Zahl von 0 bis 50 stehen
   oder
c) einwertigen, gegebenenfalls alkoxylierten Alkoholen der Formel V 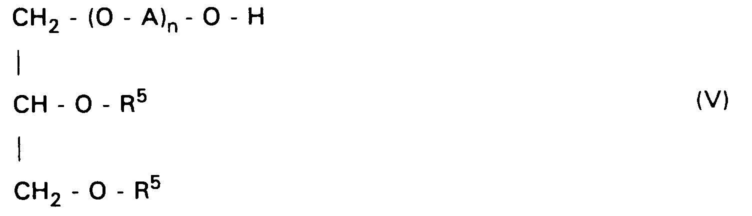 in der
   - R⁵: C₁₀-C₃₁-Alkyl, C₁₀-C₃₂-Alkenyl oder eine Gruppe der Formel C(O)-R⁶ bedeutet, wobei
   - R⁶: die vorstehend genannte Bedeutung besitzt,
   - A: Alkylengruppen mit 2 bis 10 C-Atomen bezeichnet
   und
   - n: für eine Zahl von 0 bis 50 steht
   oder
d) zweiwertigen, gegebenenfalls alkoxylierten Alkoholen der Formel VI

   H -(O - A)ₚ - O - R⁴ - O - (A - O)ₙ - H (VI)

   in der
   - R⁴: C₁-C₁₀-Alkylen, C₂-C₁₀-Alkenylen, C₅-C₂₀-Cycloalkylen oder C₆-C₁₈-Arylen bedeutet,
   - A: Alkylengruppen mit 2 bis 10 C-Atomen bezeichnet
   und
   n und p gleich oder verschieden sind und für eine Zahl von 0 bis 50 stehen
   oder
e) zweiwertigen, gegebenenfalls alkoxylierten Alkoholen der Formel VII und/oder VIII 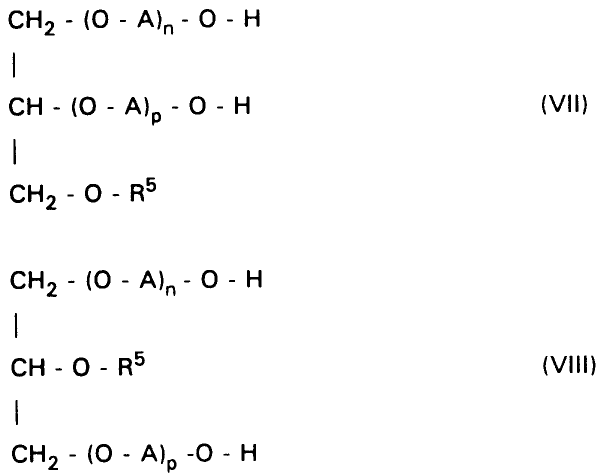 in denen
   - R⁵: C₁₀-C₃₁-Alkyl, C₁₀-C₃₂-Alkenyl oder eine Gruppe der Formel C(O)-R⁶ bedeutet, wobei
   - R⁶: die zuvor genannte Bedeutung besitzt,
   - A: Alkylengruppen mit 2 bis 10 C-Atomen bezeichnet
   und
   n und p gleich oder verschieden sind und für eine Zahl von 0 bis 50 stehen
   oder
f) einem Gemisch aus Verbindungen der Gruppen a) bis e) erhalten werden.

Diese Acetale sind biologisch gut abbaubar und ersetzen in Motor-, Getriebe- und Schmierölen sowie in Metallbearbeitungs-, Kühl-, Kühlschmier- und Hydraulikflüssigkeiten die bisher bekannten Basisöle, Ölkomponenten und Mineralöle ganz oder teilweise.

## Beschreibung

Mineralöle sind vielfach die Basisöle oder Komponenten für Motor-, Getriebe- und Schmieröle sowie Metallbearbeitungs-, Kühl-, Kühlschmier- und Hydraulikflüssigkeiten. Ihr biologischer Abbau verläuft relativ langsam und unvollständig. Für Motor-, Getriebe- und Schmieröle sowie Metallbearbeitungs-, Kühl-, Kühlschmier- und Hydraulikflüssigkeiten werden vorwiegend bzw. vielfach Fraktionen des Erdöls eingesetzt. Um dem Einsatzzweck zu genügen werden sie aufbereitet und mit den geeigneten Additiven versetzt. In letzter Zeit fordert man aus ökologischen Gründen immer besser biologisch abbaubare Produkte.

Aus EP-A- 0 512 501 ist die Verwendung von Acetalen in Invertemulsionsbohrspülungen, Emulsionsbohrspülungen, Motor-, Getriebe- und Schmierölen sowie Metallbearbeitungs-, Kühl-, Kühlschmier- und Hydraulikflüssigkeiten bekannt. Die beschriebenen Acetale werden durch Wasserabspaltung aus Aldehyden und Alkoholen im sauren Bereich synthetisiert. Für die Herstellung dieser Acetale eignen sich besonders Aldehyde mit 1 bis 25 C-Atomen, bevorzugt mit 1 bis 10 C-Atomen. Als Alkohole kommen insbesondere einwertige Alkohole mit 1 bis 25 C-Atomen, vorzugsweise mit 4 bis 20 C-Atomen zum Einsatz. Die Acetale können auch durch Umsetzung zweiwertiger Aldehyde, insbesondere mit 2 bis 10 C-Atomen, wie Glyoxal, Weinsäuredialdehyd, Succindialdehyd, Malen- und Fumarsäuredialdehyd, mit den genannten Alkoholen hergestellt werden. Die Acetale können aus einem Gemisch von verschiedenen oder aus kettenreinen Alkoholen und/oder Aldehyden bestehen.

Die japanische Offenlegungsschrift Nr. 58-008797 offenbart Gleitmittel, die eine Verbindung der Formel 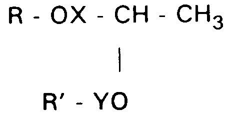 enthalten, worin
R und R' jeweils einen geradkettigen oder verzweigten Alkylrest, einen geradkettigen oder verzweigten Alkenylrest oder einen alkylsubstituierten Phenylrest bedeuten und
X und Y jeweils eine Oxalkylenkette aus 2 bis 100 Einheiten der Formeln -CH₂CH₂O- und/oder -CH₂CH(CH₃)O- darstellen.

US-A-3 563 893 beschreibt Acetale, die durch Umsetzung von Methoxyacetaldehyd mit Alkylethern niederer Alkohole erhalten werden. Diese Acetale besitzen die nachfolgende Formel 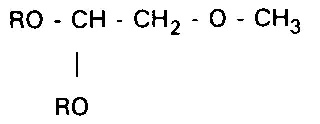 worin
- R: R¹O-(CH₂CH₂O)ₙ-CH₂CH₂- oder R²O-[CH₂CH(CH₃)O]ₙ-CH₂CH(CH₃)-bedeuten,
R¹ und R² aliphatische Kohlenwasserstoffreste mit bis zu vier Kohlenstoffatomen darstellen und n die Zahl 0, 1 oder 2 bedeuten.
Diese Acetale eignen sich als Zusätze für nichtmineralische hydraulische Bremsflüssigkeiten, da sie in der Lage sind, das an derartige Bremsflüssigkeiten gestellte Anforderungsprofil zu verbessern. Der Gehalt an derartigen Acetalen liegt bei 30 bis 80 Volumenteilen, bezogen auf 100 Volumenteile Bremsflüssigkeit.
Die vorgenannten Bremsflüssigkeiten können des weiteren niedere Alkylether des Polyethylenglykols bzw. Polypropylenglykols mit einem Molekulargewicht von größer gleich 400 enthalten. Der Gehalt dieser Verbindungen beträgt bis zu 30 Volumenteile, bezogen auf 100 Volumenteile Bremsflüssigkeit.

Die EP-A-0 019 999 nennt Acetale, die durch Umsetzung eines Polyols enthaltend mindestens vier Hydroxylgruppen mit aliphatischen Aldehyden mit 7 bis 30 Kohlenstoffatomen erhalten werden und deren freie Hydroxylgruppen mit einem oder mehreren niederen (C₂-C₄)-Alkylenoxiden, wie Ethylenoxid oder Propylenoxid, zu Polyoxyalkylenketten verethert werden. Diese Acetale besitzen gute oberflächenaktive Eigenschaften und werden u.a. als Gleitmittel eingesetzt.

US-A-3 900 411 betrifft Gleitmittelzusammensetzungen mit verbesserten Tensideigenschaften, die Acetale enthalten. Die verwendeten Acetale werden erhalten durch äquimolare Umsetzung von Alkenylbernsteinsäureanhydriden mit mehrwertigen Alkoholen und anschließender Umsetzung der erhaltenen Ester mit einem Aldehyd zum entsprechenden Acetal. Zu den bevorzugt eingesetzten Alkoholen zählen auch Glycerin und Propandiol. Zu den bevorzugt eingesetzten Aldehyden zählen Formaldehyd, Salicylaldehyd, Glyoxal, Butyraldehyd und Benzaldehyd.

Obwohl sich diese bereits bekannte Acetale durch gute Anwendungseigenschaften und eine zufriedenstellende biologische Abbaubarkeit auszeichnen, besteht weiterhin ein Bedarf an Verbindungen, die sich im Hinblick auf ihre Schmierwirkung, Wasserlöslichkeit und biologische Abbaubarkeit von den bereits bekannten Acetalen in vorteilhafter Weise unterscheiden.

Überraschenderweise hat sich gezeigt, daß Acetale auf Basis von einwertigen, alkoxylierten Alkoholen und/oder zweiwertigen, gegebenenfalls alkoxylierten Alkoholen dieses verbesserte Eigenschaftsprofil zeigen.

Gegenstand der Erfindung sind somit Motor-, Getriebe-, Schmieröle, Metallbearbeitungs-, Kühl-, Kühlschmier- und Hydraulikflüssigkeiten enthaltend Acetale, die durch die Umsetzung von einwertigen Aldehyden der Formel I

R¹ - CHO (I)

in der
- R¹: Wasserstoff, C₂-C₂₅-Alkyl, C₂-C₂₅-Alkenyl, C₁-C₂₀-Alkyl-C₆-C₁₂-Aryl oder C₆-C₁₂-Aryl bedeutet
oder
zweiwertigen Aldehyden der Formel II

OHC - (R²)ₐ - CHO (II)

in der
- R²: C₁-C₅-Alkylen, C₂-C₅-Alkenylen, C₆-C₁₂-Arylen oder C₁-C₂₀-Alkyl-C₆-C₁₂-Arylen bedeutet und
- a: entweder 0 oder 1 ist.
oder
einem Gemisch aus den Aldehyden der Formel I und II
mit
a) einwertigen, alkoxylierten Alkoholen der Formel III

   R³ - (O - A)ₘ - OH (III)

   in der
   - R³: C₁-C₃₁-Alkyl, C₂-C₃₁-Alkenyl, C₅-C₂₀-Cycloalkyl, C₆-C₃₀-Aryl, C₁-C₁₀-Alkyl-C₆-C₃₀-Aryl, ein Säurerest der Formel C₁-C₃₁-Alkyl-C(O) oder C₂-C₃₁-Alkenyl-C(O) bedeutet,
   - A: Alkylengruppen mit 2 bis 10, bevorzugt 2 bis 5 C-Atomen bezeichnet und
   - m: für eine Zahl von 1 bis 50 steht
   oder
b) einwertigen, gegebenenfalls alkoxylierten Alkoholen der Formel IV

   H - O - (A - O)ₚ - R⁴ - (O - A)ₙ - O - R⁵ (IV)

   in der
   - R⁴: C₁-C₁₀-Alkylen, C₂-C₁₀-Alkenylen, C₅-C₂₀-Cycloalkylen oder C₆-C₁₈-Arylen, bevorzugt Phenylen bedeutet,
   - R⁵: C₁₀-C₃₁-Alkyl, C₁₀-C₃₂-Alkenyl oder eine Gruppe der Formel C(O)-R⁶ bedeutet, wobei
   - R⁶: C₁-C₃₁-Alkyl, C₂-C₃₁-Alkenyl, C₅-C₂₀-Cycloalkyl, C₆-C₃₀-Aryl oder C₁-C₁₀-Alkyl-C₆-C₃₀-Aryl bedeutet,
   - A: Alkylengruppen mit 2 bis 10, bevorzugt 2 bis 5 C-Atomen bezeichnet
   und
   n und p gleich oder verschieden sind und für eine Zahl von 0 bis 50, vorzugsweise 3 bis 35, insbesondere 5 bis 15 stehen
   oder
c) einwertigen, gegebenenfalls alkoxylierten Alkoholen der Formel V 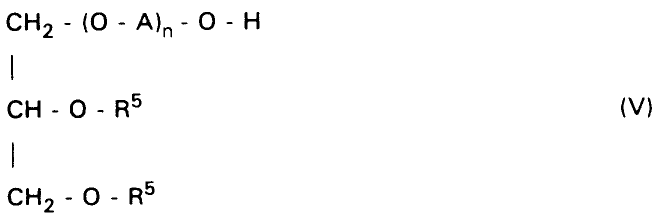 in der
   - R⁵: C₁₀-C₃₁-Alkyl, C₁₀-C₃₂-Alkenyl oder eine Gruppe der Formel C(O)-R⁶ bedeutet,
   - A: Alkylengruppen mit 2 bis 10, bevorzugt 2 bis 5 C-Atomen bezeichnet
   und
   - n: für eine Zahl von 0 bis 50, vorzugsweise 3 bis 35, insbesondere 5 bis 15 steht
   oder
d) zweiwertigen, gegebenenfalls alkoxylierten Alkoholen der Formel VI

   H -(O - A)ₚ - O - R⁴ - O - (A - O)ₙ - H (VI)

   in der
   - R⁴: C₁-C₁₀-Alkylen, C₂-C₁₀-Alkenylen, C₅-C₂₀-Cycloalkylen oder C₆-C₁₈-Arylen, bevorzugt Phenylen bedeutet,
   - A: Alkylengruppen mit 2 bis 10, bevorzugt 2 bis 5 C-Atomen bezeichnet
   und
   n und p gleich oder verschieden sind und für eine Zahl von 0 bis 50, vorzugsweise 3 bis 35, insbesondere 5 bis 15 stehen
   oder
e) zweiwertigen, gegebenenfalls alkoxylierten Alkoholen der Formel VII und/oder VIII 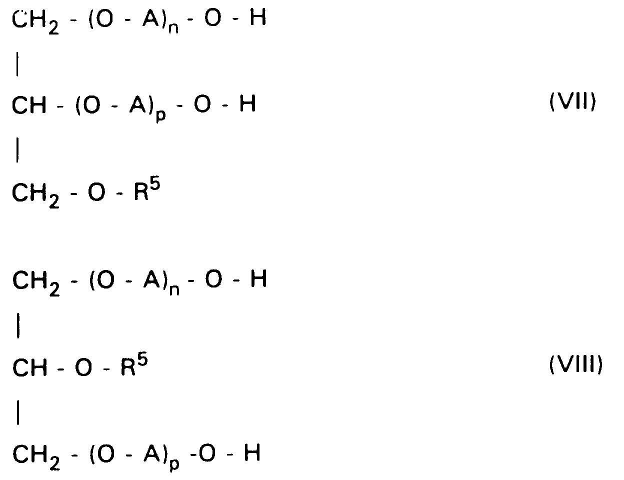 in denen
   - R⁵: C₁₀-C₃₁-Alkyl, C₁₀-C₃₂-Alkenyl oder eine Gruppe der Formel C(O)-R⁶ bedeutet,
   - A: Alkylengruppen mit 2 bis 10, bevorzugt 2 bis 5 C-Atomen bezeichnet
   und
   n und p gleich oder verschieden sind und für eine Zahl von 0 bis 50, vorzugsweise 3 bis 35, insbesondere 5 bis 15 stehen
   oder
f) einem Gemisch aus Verbindungen der Gruppen a) bis e) erhalten werden.

Zur Herstellung der erfindungsgemäß verwendeten Acetale eignen sich einwertige und/oder zweiwertige Aldehyde, bevorzugt einwertige Aldehyde. Derartige Aldehyde können verzweigt oder unverzweigt, gesättigt oder ungesättigt und aliphatisch oder aromatisch sein.

Die einwertigen Aldehyde besitzen die allgemeine Formel I

R¹ - CHO (I),

in der
- R¹: Wasserstoff, C₂-C₂₅-Alkyl, bevorzugt C₂-C₁₀-Alkyl, C₂-C₂₅-Alkenyl, bevorzugt C₂-C₁₀-Alkenyl, C₆-C₁₂-Aryl, bevorzugt Phenyl oder C₁-C₂₀-Alkyl-C₆-C₁₂-Aryl bedeutet.
Beispielhaft für aliphatische Aldehyde seien genannt: Butanale, Pentanale, Hexanale, Heptanale, Octanale, Nonanale und Decanale. Als einwertige Aldehyde kommen insbesondere in α-Stellung verzweigte, vornehmlich methyl- oder ethylverzweigte, gesättigte oder ungesättigte Aldehyde in Betracht, wie Isobutanal, 2-Ethylpentanal, 2-Ethylhexanal, 2-Ethylheptanal, 2-Ethyloctanal, 2-Methylpenten-(1)-al und 2-Ethylhexen-(1)-al. Als einwertige aromatische Aldehyde werden bevorzugt Benzaldehyd und dessen substituierte Derivate eingesetzt.

Die zweiwertigen Aldehyde besitzen die allgemeine Formel II

OHC - (R²)ₐ - CHO (II),

in der
- R²: C₁-C₅-Alkylen, C₂-C₅-Alkenylen, C₆-C₁₂-Arylen, bevorzugt Phenylen oder C₁-C₂₀-Alkyl-C₆-C₁₂-Arylen bedeutet und
- a: entweder 0 oder 1 ist.
Als zweiwertige Aldehyde kommen insbesondere in Betracht:
Glyoxal, Weinsäuredialdehyd, Succindialdehyd, Malen- und Fumarsäuredialdehyd, Glutaraldehyd, Terephthaldialdehyd, vorzugsweise Glyoxal.

Als Reaktionspartner a) geeignete einwertige, alkoxylierte Alkohole besitzen die allgemeine Formel III

R³ - (O - A)ₘ - OH (III)

in der
- R³: C₁-C₃₁-Alkyl, C₂-C₃₁-Alkenyl, C₅-C₂₀-Cycloalkyl, C₆-C₃₀-Aryl, C₁-C₁₀-Alkyl-C₆-C₃₀-Aryl, ein Säurerest der Formel C₁-C₃₁-Alkyl-C(O) oder C₂-C₃₁-Alkenyl-C(O) bedeutet,
- A: Alkylengruppen mit 2 bis 10, bevorzugt 2 bis 5 C-Atomen bezeichnet und
- m: für eine Zahl von 1 bis 50 steht.

Als geradkettige oder verzweigte Alkyl- und Alkenylgruppen R³ seien beispielsweise genannt: n-Hexyl, n-Heptyl, n-Octyl, 2-Ethylhexyl, n-Nonyl, i-Nonyl, n-Decyl, i-Decyl, n-Undecyl, n-Dodecyl, n-Tridecyl, i-Tridecyl, n-Tetradecyl, n-Pentadecyl, n-Hexadecyl, n-Heptadecyl, n-Octadecyl, n-Eicosyl, Oleyl, Linolyl und Linolenyl. Je nach Herkunft des bei der Synthese der Verbindungen der Formel III eingesetzten Alkohols handelt es sich bei R³ um Reste von natürlich vorkommenden Fettalkoholen oder von synthetisch hergestellten Oxo- oder Ziegler-Alkoholen.
Beispiele für nach der Oxo-Synthese hergestellte Alkohole sind C₁₀-, C₁₃- und C₁₅-Alkohole sowie C₉/C₁₁-, C₁₀/C₁₂-, C₁₂/C₁₄-, C₁₃/C₁₅- und C₁₆/C₁₈-Alkoholgemische.
Beispiele für nach der Ziegler-Synthese hergestellte Alkohole sind C₈/C₁₀-, C₁₀/C₁₂-, C₁₂/C₁₄-, C₁₄/C₁₆-, C₁₆/C₁₈- und C₁₈/C₂₀-Alkoholgemische.
Da die bei der Synthese der Verbindungen der Formel III eingesetzten Alkohole, bei denen R³ Alkyl- oder Alkenylgruppen darstellen, in der Regel statistische Homologen- und auch Isomerengemische darstellen, ist es zweckmäßig, bei diesen Resten R³ von einer durchschnittlichen Anzahl an C-Atomen zu sprechen. Bevorzugt werden Verbindungen der Formel III, bei denen R³ Alkyl- oder Alkenylgruppen mit 9 bis 25 C-Atomen, insbesondere mit 10 bis 18 C-Atomen bedeuten. Besonders vorteilhaft sind solche Reste R³, die auf die C₁₀-Fraktion, die C₁₃-Fraktion, den C₁₀/C₁₂-, den C₁₂/C₁₄-, den C₁₃/C₁₅- oder den C₁₆/C₁₈-Schnitt eines Alkohols zurückgeführt werden können.
Die Säurereste der obengenannten Formeln leiten sich von natürlichen oder synthetischen Fettsäuren ab. Hierzu zählen insbesondere gesättigte Fettsäuren, wie Laurinsäure, Myristinsäure, Palmitinsäure, Stearinsäure und Arachinsäure sowie ungesättigte Fettsäuren, wie Ölsäure, Vaccensäure, Gadoleinsäure, Arachidonsäure, Cetoleinsäure, Erucasäure und Nervonsäure.

Die Alkylengruppen A bezeichnen insbesondere die Ethylen-, daneben aber auch die Propylen-, 1,2-Butylen und 2,3-Butylengruppe. Dabei kann jede Gruppe A auch ein statistisches Gemisch aus mehreren der genannten Alkylengruppen bezeichnen. Bevorzugt werden jedoch Alkylengruppen A eingesetzt, die nur eine einzige Baueinheit A enthalten.

Die Alkoxylierungsgrade m liegen zwischen 1 und 50, vorzugsweise 3 bis 35, insbesondere 5 bis 15. Die Werte für m stellen üblicherweise Durchschnittswerte dar.

Bevorzugte Alkohole der Formel III sind Polyglykolether auf Basis verschiedener Fettalkohole und Alkylphenole, die unter den Warenzeichen ®Genapol, ®Sapogenat und ®Arkopal (Hersteller: Hoechst AG, DE) erhältlich sind.

Die alkoxylierten Alkohole der Formel III können in bekannter Weise durch Alkoxylierung der entsprechenden obengenannten Fettalkohole, Oxo-Alkohole oder Ziegler-Alkohole hergestellt werden.

Als Reaktionspartner b) dienen einwertige, gegebenenfalls alkoxylierte Alkohole der Formel IV

H - O - (A - O)ₚ - R⁴ - (O - A)ₙ - O - R⁵ (IV)

in der
- R⁴: C₁-C₁₀-Alkylen, C₂-C₁₀-Alkenylen, C₅-C₂₀-Cycloalkylen oder C₆-C₁₈-Arylen, bevorzugt Phenylen bedeutet,
- R⁵: C₁₀-C₃₁-Alkyl, C₁₀-C₃₂-Alkenyl oder eine Gruppe der Formel C(O)-R⁶ bedeutet, wobei
- R⁶: C₁-C₃₁-Alkyl, C₂-C₃₁-Alkenyl, C₅-C₂₀-Cycloalkyl, C₆-C₃₀-Aryl, oder C₁-C₁₀-Alkyl-C₆-C₃₀-Aryl bedeutet,
- A: Alkylengruppen mit 2 bis 10, bevorzugt 2 bis 5 C-Atomen bezeichnet
und
n und p gleich oder verschieden sind und für eine Zahl von 0 bis 50, vorzugsweise 3 bis 35, insbesondere 5 bis 15 stehen.

Bevorzugte Alkohole der Formel IV sind Verbindungen in denen R⁴ C₂-C₅-Alkylen bedeutet. Diese Verbindungen leiten sich von zweiwertigen Alkoholen, wie Ethylenglykol, 1,4-Butandiol und Neopentylglykol ab.

Die bevorzugten Reste C(O)-R⁶, worin R⁶ C₁₀-C₃₁-Alkyl oder C₂-C₃₂-Alkenyl ist, leiten sich von natürlichen oder synthetischen Fettsäuren ab. Hierzu zählen insbesondere gesättigte Fettsäuren, wie Laurinsäure, Myristinsäure, Palmitinsäure, Stearinsäure und Arachinsäure sowie ungesättigte Fettsäuren, wie Ölsäure, Vaccensäure, Gadoleinsäure, Arachidonsäure, Cetoleinsäure, Erucasäure und Nervonsäure.

Die gegebenenfalls alkoxylierten Alkohole der Formel V (R⁵ = C₁₀-C₃₁-Alkyl oder C₁₀-C₃₂-Alkenyl) werden durch Alkoxylierung der zugrundeliegenden zweiwertigen Alkohole und anschließender Veretherung nach an sich bekannten Verfahren erhalten. Geeignete Verfahren zur Veretherung sind z.B. aus J. March, Advanced Organic Chemistry, 2. Auflage, S. 357f (1977) bekannt. Die Veresterung der gegebenenfalls alkoxylierten Alkohole der Formel IV (R⁵ = C(O)-R⁶) erfolgt durch Umsetzung mit gängigen Veresterungsmitteln, wie Carbonsäuren, bevorzugt Fettsäuren oder Fettsäuregemischen, Carbonsäurehalogeniden, Carbonsäureanhydriden oder Carbonsäureestern von C₁-C₄-Alkoholen.

Als Reaktionspartner c) dienen einwertige, gegebenenfalls alkoxylierte Alkohole der Formel V 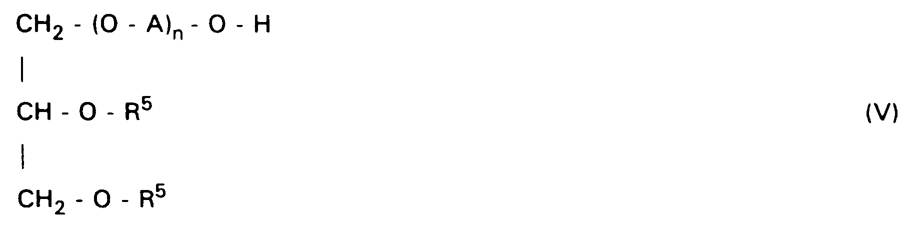 in der
- R⁵: C₁₀-C₃₁-Alkyl, C₁₀-C₃₂-Alkenyl oder eine Gruppe der Formel C(O)-R⁶ bedeutet, wobei
- R⁶: die vorstehend genannte Bedeutung hat,
- A: Alkylengruppen mit 2 bis 10, bevorzugt 2 bis 5 C-Atomen bezeichnet
und
- n: für eine Zahl von 0 bis 50, vorzugsweise 3 bis 35, insbesondere 5 bis 15 steht.
Die Verbindungen der Formel V leiten sich von Glycerin ab und werden analog den Verbindungen der Formel IV hergestellt. Die bevorzugten Reste R⁵ und R⁶ besitzen die gleiche Bedeutung wie bei den Alkoholen der Formel IV angegeben.

Zur Herstellung der erfindungsgemäßen Acetale eignen sich auch zweiwertige, gegebenenfalls alkoxylierte Alkohole. Hierzu zählen die Alkohole der Formeln VI, VII und VIII.
Bei den als Reaktionspartner d) bezeichneten Verbindungen handelt es sich um zweiwertige, gegebenenfalls alkoxylierte Alkohole der Formel VI

H -(O - A)ₚ - O - R⁴ - O - (A - O)ₙ - H (VI)

in der
- R⁴: C₁-C₁₀-Alkylen, C₂-C₁₀-Alkenylen, C₅-C₂₀-Cycloalkylen oder C₆-C₁₈-Arylen, bevorzugt Phenylen bedeutet,
- A: Alkylengruppen mit 2 bis 10, bevorzugt 2 bis 5 C-Atomen bezeichnet
und
n und p gleich oder verschieden sind und für eine Zahl von 0 bis 50, vorzugsweise 3 bis 35, insbesondere 5 bis 15 stehen.
Diese Verbindungen können in bekannter Weise durch Alkoxylierung der zugrundeliegenden zweiwertigen Alkohole hergestellt werden.
Bevorzugte Alkohole der Formel VI sind Verbindungen in denen R⁴ C₂-C₅-Alkylen bedeutet. Diese Verbindungen leiten sich von zweiwertigen Alkoholen, wie Ethylenglykol, Propylenglykol, 1,4-Butandiol und Neopentylglykol ab.

Eine weitere Gruppe von Verbindungen, die zur Herstellung der erfindungsgemäßen Acetale geeignet sind, stellen die gegebenenfalls alkoxylierten Alkohole der Formeln VII und VIII 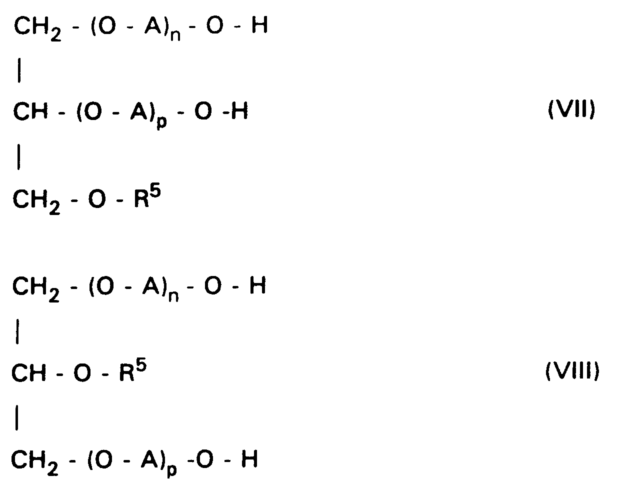 (Reaktionspartner e) dar,
in denen
- R⁵: C₁₀-C₃₁-Alkyl, C₁₀-C₃₂-Alkenyl oder eine Gruppe der Formel C(O)-R⁶ bedeutet, wobei
- R⁶: die zuvor genannte Bedeutung besitzt,
- A: Alkylengruppen mit 2 bis 10, bevorzugt 2 bis 5 C-Atomen bezeichnet
und
n und p gleich oder verschieden sind und für eine Zahl von 0 bis 50, vorzugsweise 3 bis 35, insbesondere 5 bis 15 stehen.
Die Verbindungen der Formeln VII und VIII leiten sich von Glycerin ab und werden analog den Verbindungen der Formel V hergestellt. Die bevorzugten Reste R⁵ und R⁶ besitzen die gleiche Bedeutung wie bereits bei den Alkoholen der Formel IV angegeben

Die erfindungsgemäß verwendeten Acetale werden durch Wasserabspaltung aus den vorstehend genannten Aldehyden und mindestens einem der Reaktionspartner a) bis e) hergestellt.

Nachfolgend wird auf die Herstellungsverfahren von bevorzugt verwendeten Acetalen eingegangen.
A) Acetale aus Aldehyden der Formel I und Alkoholen der Formel III: Die vorstehend genannten einwertigen Alkohole der Formel III werden bevorzugt mit einwertigen Aldehyden der Formel I zu den entsprechenden Acetalen umgesetzt, wobei die Aldehydgruppe mit zwei Alkoholmolekülen unter Bildung von Wasser reagiert.
   Die eingesetzten Alkohole der Formel III können gleich oder verschieden sein. Die Umsetzung wird üblicherweise bei Temperaturen von 20 bis 200°C in Gegenwart katalytischer Mengen Säure durchgeführt. Üblicherweise wird das sich bildende Reaktionswasser mit Hilfe eines geeigneten Schleppmittels durch Azeotropdestillation entfernt.
   Die Umsetzung erfolgt vorzugsweise bei 30 bis 160°C, insbesondere bei 50 bis 150°C und in der Regel bei Normaldruck. Ein zusätzliches inertes Lösungs- oder Verdünnungsmittel ist normalerweise nicht notwendig, kann aber im Bedarfsfall, beispielsweise bei Viskositätsproblemen, zugesetzt werden.
   Als Schleppmittel eignen sich alle organischen Lösungsmittel, die mit Wasser ein entsprechendes Azeotrop bilden. Hierunter fallen aliphatische Kohlenwasserstoffe, chlorierte Kohlenwasserstoffe, wie Methylenchlorid, Dichlormethan und Tetrachlorkohlenstoff, cyclische Kohlenwasserstoffe, wie Cyclohexan, Cyclohexanderivate und aromatische Kohlenwasserstoffe, wie Toluol und Xylol.
   Als Katalysatoren eignen sich sowohl Lewis-Säuren, z.B. BF₃, AlCl₃, ZnCl₂ oder TiCl₄, als auch Mineralsäuren, beispielsweise Salzsäure, Schwefelsäure, Phosphorsäure oder unterphosphorige Säure. Ebenfalls geeignet sind organische Carbon- und Sulfonsäuren, z.B. Methansulfonsäure, p-Toluolsulfonsäure, Oxalsäure, Ameisensäure und Essigsäure. Der saure Katalysator wird in den hierbei üblichen Mengen zugesetzt, also normalerweise in einer Menge von etwa 0,1 bis 5 Mol.-%, bezogen auf die Menge des eingesetzten Aldehyds. Eine Neutralisation des sauren Katalysators nach erfolgter Umsetzung kann mit anorganischen Basen, z.B. NaOH, KOH, Na₂CO₃ oder organischen Basen, z.B. Trimethylamin, Triethylamin oder Pyridin erfolgen.
B) Acetale aus Aldehyden der Formel I und Alkoholen der Formel IV, V, VI, VII und/oder VIII:
   Eine weitere Gruppe von bevorzugt verwendeten Acetalen besteht aus den Umsetzungprodukten von einwertigen Aldehyden der Formel I und den vorstehend beschriebenen Alkoholen der Formeln IV, V, VI, VII und/oder VIII. Die Umsetzung erfolgt analog der vorstehend beschriebenen Umsetzung A), wobei Aldehyd und Alkohol oder Alkoholgemisch bevorzugt in Molverhältnissen von 1:2 bei Alkoholen der Formeln V und VI und in Molverhältnissen von 1:1-2 bei Alkoholen der Formeln IV und VII unter Wasserabspaltung umgesetzt werden.

Die erfindungsgemäßen Acetale ersetzen in den Motor-, Getriebe- und Schmierölen sowie den Metallbearbeitungs-, Kühl-, Kühlschmier- und Hydraulikflüssigkeiten die bisher bekannten Basisöle, Ölkomponenten und Mineralöle ganz oder teilweise.

Diese Acetale lassen sich je nach Löslichkeit in zwei Gruppen einteilen:
- wasserlösliche Acetale und
- öllösliche Acetale.
Unter wasserlöslichen Acetalen werden Verbindungen verstanden, die zu mehr als 90 % in Wasser und weniger als 1 % in Mineralöl löslich sind. Umgekehrt sind öllösliche Acetale zu mehr als 90 % in Mineralöl löslich und weniger als 1 % in Wasser löslich.

Die wasserlöslichen Acetale werden bevorzugt in wäßrigen Systemen der nachfolgend genannten Anwendungsbereiche eingesetzt, insbesondere in vollsynthetischen Kühlschmiermitteln, gegebenenfalls unter Zusatz von Korrosionsschutzmitteln, wie ®Hostacor KS 1 (Fa. Hoechst AG, DE), zur spanlosen und spanabhebenden Verformung bei der Metallbearbeitung.

Die öllöslichen Acetale finden bevorzugt Verwendung in Ölen, wie Motor-, Getriebe- und Hydraulikölen.

Neben dem Einsatz in wäßrigen Systemen können die wasserlöslichen Acetale auch in ölhaltigen Systemen (Ölen) eingesetzt werden. Üblicherweise erfolgt dieser Einsatz unter Zugabe eines geeigneten Lösungsvermittlers. Entsprechend ist es auch möglich öllösliche Acetale, üblicherweise durch Zusatz geeigneter Emulgatoren, in sogenannten wäßrigen Systemen einzusetzen.

Die erfindungsgemäßen Acetale zeichnen sich durch eine Reihe vorteilhafter Eigenschaften aus, u.a. biologischer Abbaubarkeit, Alkalibeständigkeit und gute Schmierwirksamkeit. Gerade im Hinblick auf die Schmierwirksamkeit werden diese Acetale als Komponente in wassermischbaren und nichtwassermischbaren (ölmischbaren) Metallbearbeitungshilfsmitteln der spangebenden und spanlosen Metallbearbeitung in Kühl-, Kühlschmier- und Hydraulikflüssigkeiten, Motor, Getriebe- und Schmierölen sowie Schmierfetten eingesetzt.

### Herstellungsbeispiele

Die Bestimmung der Jodfarbzahl erfolgt gemäß DIN 6162.
Die Hydroxylzahl wird nach der DGF-Methode bestimmt.
Die Viskositätsbestimmung erfolgt mittels eines Brookfield-Viskosimeters.

### A) Wasserlösliche Acetale

### Beispiel 1:

450 g (1,5 mol) ethoxyliertes 1,3-Propandiol (5 EO, Hydroxylzahl: 375) werden mit 100 ml Petrolether (Siedebereich: 90 - 110°C) und 0,5 g Methansulfonsäure unter Rühren auf 95 bis 100°C erwärmt. 72,1 g (1 mol) Isobutyraldehyd werden so schnell zugesetzt, daß die Siedetemperatur nicht unter 85°C sinkt. Die Umsetzung ist beendet, wenn kein Wasser mehr aus dem Reaktionsgemisch ausgetragen wird. Zum Entfernen der überschüssigen Methansulfonsäure werden 1,5 ml 30 gew.-%ige Natriummethylatlösung zugesetzt. Vorhandenes Natriummethansulfonat wird abfiltriert und das Produkt destillativ gereinigt.
Ausbeute: 98,6 %
Jodfarhzahl: < 0,5
Hydroxylzahl: 157,3
Viskosität: 215 mPa·s (21°C)

### Beispiel 2:

1080 g (1,8 mol) ethoxyliertes 1,3-Propandiol (12 EO, Hydroxylzahl: 187) werden mit 300 ml Petrolether (Siedebereich: 90 - 110°C) und 3,2 g Methansulfonsäure unter Rühren auf 95 bis 100°C erwärmt. 129,8 g (1,8 mol) Isobutyraldehyd wird so schnell zugesetzt, daß die Siedetemperatur nicht unter 90°C sinkt.
Nach beendeter Umsetzung werden dem Reaktionsansatz zum Entfernen von überschüssiger Methansulfonsäure 8 ml 30 gew.-%ige Natriummethylatlösung zugesetzt. Vorhandenes Natriummethansulfonat wird abfiltriert und das Produkt destillativ gereinigt.
Ausbeute: 98,4 %
Jodfarbzahl: < 1
Hydroxylzahl: 78,5
Viskosität: 985 mPas (20°C)

### Beispiel 3:

1101 g (1,1 mol) ethoxyliertes 1,3-Propandiol (21 EO, Hydroxylzahl: 112) werden mit 300 ml Petrolether (Siedebereich: 90 - 110°C) und 3,0 g Methansulfonsäure unter Rühren auf 95 bis 100°C erwärmt. 79,3 g (1,1 mol) Isobutyraldehyd wird so schnell zugesetzt, daß die Siedetemperatur nicht unter 90°C sinkt. Nach beendeter Umsetzung werden dem Reaktionsansatz 8 ml 30 gew.-%ige Natriummethylatlösung zugesetzt, vorhandenes Natriummethansufonat abfiltriert und das Produkt destillativ gereinigt.
Ausbeute: 97 %
Jodfarbzahl: 1,8
Viskosität: 2965 mPas (20°C)

### Beispiel 4

603,9 g (1,5 mol) ethoxylierte Stearinsäure (10 EO, Hydroxylzahl: 279) werden mit 350 ml Petrolether (Siedebereich: 90 - 110°C) und 1,3 g Methansulfonsäure unter Rühren auf 95 bis 100°C erwärmt. 113,6 g (1,6 mol) Isobutyraldehyd wird so schnell zugesetzt, daß die Siedetemperatur nicht unter 90°C sinkt. Nach beendeter Umsetzung werden dem Reaktionsansatz 5 ml 30 gew.-%ige Natriummethylatlösung zugesetzt, vorhandenes Natriummethansulfonat abfiltriert und das Produkt destillativ gereinigt.
Ausbeute: 92,7 %
Jodfarbzahl: 3,2
Viskosität: 524 mPas (20°C)

### B) Öllösliche Acetale:

### Beispiel 5

3080 g (5,6 mol) Diglycerinsesquioleat (hergestellt aus 2 mol Glycerin und 3 mol Ölsäure (Hydroxylzahl: 197,5) werden mit 880 ml Petrolether (Siedebereich: 90 - 110°C) und 5,5 g Methansulfonsäure unter Rühren auf 95 bis 100°C erwärmt. 201,9 g (2,8 mol) Isobutyraldehyd werden so schnell zugesetzt, daß die Siedetemperatur nicht unter 105°C sinkt. Nach beendeter Umsetzung werden dem Reaktionsansatz 22 ml 30 gew.-%ige Natriummethylat zugesetzt, vorhandenes Natriummethansulfonat abfiltriert und das Produkt destillativ gereinigt.
Ausbeute: 99,2 %
Jodfarbzahl: 3,7
Hydroxylzahl: 99,2
Viskosität: 115 mPa·s (21°C)

### Beispiel 6:

3292,3 g (7,6 mol) ethoxyliertes Dodecanol (5 EO, Hydroxylzahl: 129,5) werden mit 940 ml Petrolether (Siedebereich: 90 - 110°C) und 9,9 g Methansulfonsäure unter Rühren auf 95 bis 100°C erwärmt. 274,0 g (3,8 mol) Isobutyraldehyd werden so schnell zugesetzt, daß die Siedetemperatur nicht unter 110°C sinkt. Nach beendeter Umsetzung werden dem Reaktionsansatz 25 ml 30 gew.-%ige Natriummethylatlösung zugesetzt, vorhandenes Natriummethansulfonat abfiltriert und das Produkt destillativ gereinigt.
Ausbeute: 98,8 %
Jodfarbzahl: < 1
Hydroxylzahl: 29
Viskosität: 71 mPas (20°C)

### Beispiel 7:

840,5 g (1,53 mol) Diglycerinsesquioleat (Hydroxylzahl: 203,7) werden mit 300 ml Petrolether (Siedebereich: 90 - 110°C) und 4,7 g Methansulfonsäure unter Rühren auf 105°C erwärmt. 108,4 g (0,76 mol) Isononylaldehyd wird so schnell zugesetzt, daß die Siedetemperatur nicht unter 105°C sinkt. Nach beendeter Umsetzung werden dem Reaktionsansatz 13 ml 30 gew.-%ige Natriummethylatlösung zugesetzt, vorhandenes Natriummethansulfonat abfiltriert und das Produkt destillativ gereinigt.
Ausbeute: 99 %
Jodfarbzahl: 5,3
Hydroxylzahl: 105,6
Viskosität: 68 mPas (20°C)

### Anwendungstechnische Prüfungen:

Die nachstehenden Methoden werden zur Charakterisierung von Metalbearbeitungsflüssigkeiten angewendet.

Der Brechungsindex wird bei 20°C gemessen.
Die Viskosität [mPas] wird mit einem Brookfield-Viskosimeter bei 20°C bestimmt.

Die Prüfung der spezifischen Flächenpressung [bar] erfolgt mit der Reibverschleißwaage (RVW) nach Reichardt (Fa. Sommer und Runge, Berlin) unter den folgenden Bedingungen: 1000 U/min, 20 dN Last.
Der Schlagschaumtest wird mit einer Lochplatte und einer Schlagfrequenz von 25 Schlägen während 30 Sekunden in einem 100 ml Meßzylinder mit 50 ml Prüfflüssigkeit durchgeführt. Unmittelbar anschließend sowie nach einer Minute wird die Höhe des dabei gebildeten Schaumes gemessen. Die Angabe erfolgt in mm.

### A) Wasserlösliche Acetale

Tabelle I enthält die Prüfungsergebnisse der Herstellungsbeispiele 1, 2, 3 und 4.

| Herstellungsbeispiel | Brechungsindex | Viskosität | Flächenpressung | Schlagschaum | Aussehen |
|---|---|---|---|---|---|
| 1 | 1,4620 | 301 | 320 | 78/50 | klar |
| 2 | 1,4666 | 985 | 870 | 82/68 | klar |
| 3 | 1,4692 | 2965 | 1770 | 72/50 | klar |
| 4 | 1,4655 | 621 | 470 | 80/74 | klar |

Je höher die spezifische Flächenpressung, bei der die Schmierwirkung zusammenbricht, um so besser ist die Schmierwirkung der Flüssigkeit.

Prüfung der spezifischen Flächenpressung von Acetalen in Leitungswasser (LW): Bedingungen wie vorstehend.

In Tabelle II ist die spezifische Flächenpressung [bar] der Herstellungsbeispiele 1, 2, 3 und 4 in 5, 10, 20 und 50 gew.-%iger Lösung in Leitungswasser (LW) angegeben.

| Herstellungsbeispiel | Lösung | | | |
|---|---|---|---|---|
| | 5 gew.-%ig | 10 gew.-%ig | 20 gew.-%ig | 50 gew.-%ig |
| 1 | 240 | 290 | 330 | 315 |
| 2 | 295 | 375 | 445 | 870 |
| 3 | 280 | 380 | 500 | 1770 |
| 4 | 275 | 305 | 335 | 470 |

Prüfung der erfindungsgemäßen Acetale unter Zusatz eines Korrosionsschutzmittels:

**Tabelle III**

| | Formulierung 1 | Formulierung 2 |
|---|---|---|
| Zusammensetzung | 40 Gew.-% Herstellungsbeispiel 2 60 Gew.-% ®Hostacor KS 1 | 50 Gew.-% Herstellungsbeispiel 3 50 Gew.-% ®Hostacor KS 1 |
| Aussehen (konz. Lsg.) | klar | klar |
| Aussehen (3 Gew.-% in LW) | transparent | klar |
| pH-Wert (3 Gew.-% in LW) | 8,3 | 8,5 |
| RVW-Test (5 Gew.-% in LW) | 260 | 345 |
| Filterpapiertest (1 Gew.-% in LW) | 4 | 4 |
| Filterpapiertest (2 Gew.-% in LW) | 3 | 3 |
| Test nach DIN 5135 012 (3 Gew.-% in LW) | 0 | 3 |
| Korrosionsschutznote (4 Gew.-% in LW) | 0 | 0 |
| Korrosionsschutznote (5 Gew.-% in LW) | 0 | 0 |

Tabelle IV enthält die Korrosionsschutznoten, gemessen nach 2 Stunden, gemäß Korrosionsschutztest nach DIN 51360/2

| | Formulierung 1 | Formulierung 2 |
|---|---|---|
| Gew.-% Formulierung in Leitungswasser | 40 Gew.-% Herstellungsbeispiel 2 60 Gew.- % ®Hostacor KS 1 | 50 Gew.-% Herstellungsbeispiel 3 50 Gew.-% ®Hostacor KS1 |
| 1 | 4 | 4 |
| 2 | 3 | 3 |
| 3 | 0 | 3 |
| 4 | 0 | 0 |
| 5 | 0 | 0 |

### B) Öllösliche Acetale

Tabelle V enthält die Prüfungsergebnisse der Herstellungsbeispiele 5, 6 und 7.

| Herstellungsbsp. | Brechungsindex | Viskosität | Flächenpressung |
|---|---|---|---|
| 5 | 1,4688 | 68 | 290 |
| 6 | 1,4563 | 43 | 245 |
| 7 | 1,4684 | 94 | 240 |

Prüfung der spezifischen Flächenpressung von Acetalen in Mineralöl:

In Tabelle VI ist die spezifische Flächenpressung [bar] der Herstellungsbeispiele 5, 6 und 7 in 5, 10, 20 und 50 gew.-%iger Lösung in Mineralöl (®Shell Gravex 915) angegeben.

| | Lösung | | | |
|---|---|---|---|---|
| Herstellungbsp. | 5 gew.-%ig | 10 gew.-%ig | 20 gew.-%ig | 50 gew.-%ig |
| 5 | 90 | 105 | 135 | 265 |
| 6 | 90 | 100 | 130 | 290 |
| 7 | 110 | 145 | 200 | 245 |

## Patentansprüche

1. Motor-, Getriebe-, Schmieröle, Metallverarbeitungs-, Kühl-, Kühlschmier- und Hydraulikflüssigkeiten enthaltend Acetale, die durch die Umsetzung von einwertigen Aldehyden der Formel I
R¹ - CHO (I)
in der
R¹ Wasserstoff, C₂-C₂₅-Alkyl, C₂-C₂₅-Alkenyl, C₁-C₂₀-Alkyl-C₆-C₁₂-Aryl oder C₆-C₁₂-Aryl bedeutet
oder
zweiwertigen Aldehyden der Formel II
OHC - (R²)ₐ - CHO (II)
in der
R² C₁-C₅-Alkylen, C₂-C₅-Alkenylen, C₆-C₁₂-Arylen oder C₁-C₂₀-Alkyl-C₆-C₁₂-Arylen bedeutet und
a entweder 0 oder 1 ist,
oder einem Gemisch der Aldehyde der Formeln I und II
mit
a) einwertigen, alkoxylierten Alkoholen der Formel III
R³ - (O - A)ₘ - OH (III)
in der
R³ C₁-C₃₁-Alkyl, C₂-C₃₁-Alkenyl, C₅-C₂₀-Cycloalkyl, C₆-C₃₀-Aryl, C₁-C₁₀-Alkyl-C₆-C₃₀-Aryl, ein Säurerest der Formel C₁-C₃₁-Alkyl-C(O) oder C₂-C₃₁-Alkenyl-C(O) bedeutet,
A Alkylengruppen mit 2 bis 10 C-Atomen bezeichnet und
m für eine Zahl von 1 bis 50 steht
oder
b) einwertigen, gegebenenfalls alkoxylierten Alkoholen der Formel IV
H - O - (A - O)ₚ - R⁴ - (O - A)ₙ - O - R⁵ (IV)
in der
R⁴ C₁-C₁₀-Alkylen, C₂-C₁₀-Alkenylen, C₅-C₂₀-Cycloalkylen oder C₆-C₁₈-Arylen bedeutet,
R⁵ C₁₀-C₃₁-Alkyl, C₁₀-C₃₂-Alkenyl oder eine Gruppe der Formel C(O)-R⁶ bedeutet, wobei
R⁶ C₁-C₃₁-Alkyl, C₂-C₃₁-Alkenyl, C₅-C₂₀-Cycloalkyl, C₆-C₃₀-Aryl oder C₁-C₁₀-Alkyl-C₆-C₃₀-Aryl bedeutet,
A Alkylengruppen mit 2 bis 10 C-Atomen bezeichnet
und
n und p gleich oder verschieden sind und für eine Zahl von 0 bis 50 stehen
oder
c) einwertigen, gegebenenfalls alkoxylierten Alkoholen der Formel V 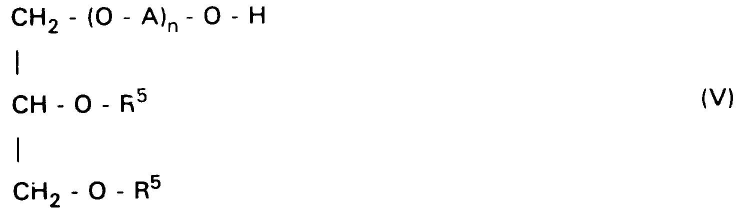 in der
R⁵ C₁₀-C₃₁-Alkyl, C₁₀-C₃₂-Alkenyl oder eine Gruppe der Formel C(O)-R⁶ bedeutet, wobei
R⁶ die vorstehend genannte Bedeutung besitzt,
A Alkylengruppen mit 2 bis 10 C-Atomen bezeichnet
und
n für eine Zahl von 0 bis 50 steht
oder
d) zweiwertigen, gegebenenfalls alkoxylierten Alkoholen der Formel VI
H -(O - A)ₚ - O - R⁴ - O - (A - O)ₙ - H (VI)
in der
R⁴ C₁-C₁₀-Alkylen, C₂-C₁₀-Alkenylen, C₅-C₂₀-Cycloalkylen oder C₆-C₁₈-Arylen bedeutet,
A Alkylengruppen mit 2 bis 10 C-Atomen bezeichnet
und
n und p gleich oder verschieden sind und für eine Zahl von 0 bis 50 stehen
oder
e) zweiwertigen, gegebenenfalls alkoxylierten Alkoholen der Formel VII und/oder VIII 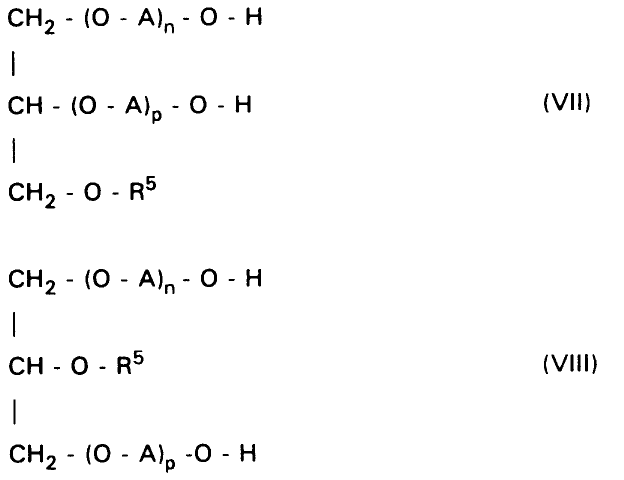 in denen
R⁵ C₁₀-C₃₁-Alkyl, C₁₀-C₃₂-Alkenyl oder eine Gruppe der Formel C(O)-R⁶ bedeutet, wobei
R⁶ die zuvor genannte Bedeutung besitzt,
A Alkylengruppen mit 2 bis 10 C-Atomen bezeichnet
und
n und p gleich oder verschieden sind und für eine Zahl von 0 bis 50 stehen
oder
f) einem Gemisch aus Verbindungen der Gruppen a) bis e) erhalten werden.

2. Flüssigkeiten gemäß Anspruch 1, dadurch gekennzeichnet, daß sie Acetale enthalten, die durch Umsetzung von einwertigen Aldehyden der Formel I,
R¹ - CHO (I)
worin R¹ C₂-C₁₀-Alkyl, C₂-C₁₀-Alkenyl oder Phenyl bedeutet, erhalten werden.

3. Flüssigkeiten gemäß Anspruch 1, dadurch gekennzeichnet, daß sie Acetale enthalten, die durch Umsetzung von zweiwertigen Aldehyden der Formel II
OHC-(R²)ₐ-CHO (II)
worin
R² C₁-C₅-Alkylen, C₂-C₅-Alkenylen, C₆-C₁₂-Arylen, bevorzugt Phenylen oder C₁-C₂₀-Alkyl-C₆-C₁₂-Arylen bedeutet und
a 1 ist, erhalten werden.

4. Flüssigkeiten gemäß Anspruch 1, dadurch gekennzeichnet, daß sie Acetale enthalten, die durch Umsetzung von einwertigen Aldehyden der Formel I mit einwertigen, alkoxylierten Alkoholen der Formel III
R³ - (O - A)ₘ - OH (III)
worin
R³ C₉-C₂₅-Alkyl, vorzugsweise C₁₀-C₁₈-Alkyl, C₉-C₂₅-Alkenyl, vorzugsweise C₁₀-C₁₈-Alkenyl, ein Säurerest der Formel C₁₀-C₂₄-Alkyl-C(O) oder C₁₀-C₂₄-Alkenyl-C(O) bedeutet,
A Alkylengruppen mit 2 bis 10, bevorzugt 2 bis 5 C-Atomen bezeichnet und
m für eine Zahl von 3 bis 35, vorzugsweise 5 bis 15 steht, erhalten werden.

5. Flüssigkeiten gemäß Anspruch 1, dadurch gekennzeichnet, daß sie Acetale enthalten, die durch Umsetzung von einwertigen Aldehyden der Formel I mit einwertigen` gegebenenfalls alkoxylierten Alkoholen der Formel IV
H - O - (A - O)ₚ - R⁴ - (O - A)ₙ - O - R⁵ (IV)
worin
R⁴ C₂-C₅-Alkylen, C₂-C₈-Alkenylen oder Phenylen bedeutet,
R⁵ C₁₀-C₃₁-Alkyl, C₁₀-C₃₂-Alkenyl oder eine Gruppe der Formel C(O)-R⁶ bedeutet, wobei
R⁶ C₁₀-C₃₁-Alkyl oder C₁₀-C₃₁-Alkenyl ist,
A Alkylengruppen mit 2 bis 10, bevorzugt 2 bis 5 C-Atomen bezeichnet
und
n und p gleich oder verschieden sind und für eine Zahl von 3 bis 35, insbesondere 5 bis 15, stehen, erhalten werden.

6. Flüssigkeiten gemäß Anspruch 1, dadurch gekennzeichnet, daß sie Acetale enthalten, die durch Umsetzung von einwertigen Aldehyden der Formel I mit einwertigen, gegebenenfalls alkoxylierten Alkoholen der Formel V 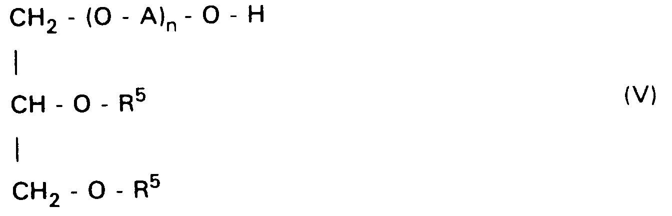 in der
R⁵ C₁₀-C₃₁-Alkyl, C₁₀-C₃₂-Alkenyl oder eine Gruppe der Formel C(O)-R⁶ bedeutet, wobei
R⁶ C₁₀-C₃₁-Alkyl oder C₁₀-C₃₁-Alkenyl ist,
A Alkylengruppen mit 2 bis 5 C-Atomen bezeichnet
und
n für eine Zahl von 3 bis 35, insbesondere 5 bis 15 steht, erhalten werden.

7. Flüssigkeiten gemäß Anspruch 1, dadurch gekennzeichnet, daß sie Acetale enthalten, die durch Umsetzung von einwertigen Aldehyden der Formel I mit zweiwertigen, gegebenenfalls alkoxylierten Alkoholen der Formel VI
H -(O - A)ₚ - O - R⁴ - O - (A - O)ₙ - H (VI)
in der
R⁴ C₁-C₁₀-Alkylen, C₂-C₁₀-Alkenylen, C₅-C₂₀-Cycloalkylen oder C₆-C₁₈-Arylen bedeutet,
A Alkylengruppen mit 2 bis 5 C-Atomen bezeichnet
und
n und p gleich oder verschieden sind und für eine Zahl von 3 bis 35, insbesondere 5 bis 15 stehen, erhalten werden.

8. Flüssigkeiten gemäß Anspruch 1, dadurch gekennzeichnet, daß sie Acetale enthalten, die durch Umsetzung von einwertigen Aldehyden der Formel I mit zweiwertigen Alkoholen der Formel VII und/oder VIII 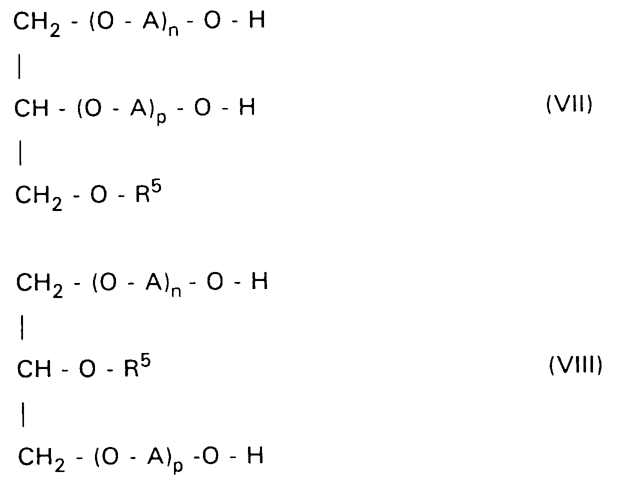 in denen
R⁵ C₁₀-C₃₁-Alkyl, C₁₀-C₃₂-Alkenyl oder eine Gruppe der Formel C(O)-R⁶ bedeutet, wobei
R⁶ C₁₀-C₃₁-Alkyl oder C₁₀C₃₁-Alkenyl ist,
R³ C₁-C₃₁-Alkyl, C₂-C₃₁-Alkenyl oder C₆-C₁₂-Aryl bedeutet,
A Alkylengruppen mit 2 bis 5 C-Atomen bezeichnet
und
n und p gleich oder verschieden sind und für eine Zahl von 0 bis 50, vorzugsweise 3 bis 35, insbesondere 5 bis 15 steht, erhalten werden.
